# EUROPÄISCHE PATENTSCHRIFT

(11) **EP 0 428 190 B1**
(45) Veröffentlichungstag und Bekanntmachung des Hinweises auf die Patenterteilung: **03.03.1993**
(21) Anmeldenummer: 90125835.0
(22) Anmeldetag: 10.11.1988
(51) Int. Cl.: B65D 25/32, B21D 51/26

(54) **Verfahren zum Herstellen eines zylindrischen Metallbehälters**
Method for producing a cylindrical metal container
Procédé de fabrication d'un récipient cylindrique en tôle

(30) Priorität: 13.11.1987 US 120471
(43) Veröffentlichungstag der Anmeldung: 22.05.1991
(62) Teilanmeldung aus: 88118704.1
(73) Patentinhaber: Van Dorn Company, Cleveland Ohio 44104 (US)
(72) Erfinder: Gallagher, Thomas A., Chagrin Falls, Ohio 44022 (US)
(74) Vertreter: Hennicke, Albrecht, Dipl.-Ing.

(56) Entgegenhaltungen:
- BE-A- 633 727
- DE-B- 1 262 876
- GB-A- 1 203 758

## Beschreibung

Die Erfindung betrifft ein Verfahren zum Herstellen eines zylindrischen Metallbehälters, insbesondere für Farben od.dgl., bei dem zwei Tragbügelösen mit napfförmigem Körper an voneinander entfernten Stellen an einem rechteckigen, flachen, die Seitenwand des Behälters bildenden Blechstück befestigt werden und dann der Behälter in seine zylindrische Form gerollt wird und die Längsränder des Blechstückes miteinander verbunden werden, so daß die Tragbügelösen sich an diametral einander gegenüberliegenden Stellen des zylindrischen Körpers befinden.

Die üblichen Metallbehälter, insbesondere Farbbehälter od. dgl., die für Endverbraucher bestimmt sind und eine zylindrische Form haben, bestehen üblicherweise aus einem Behälterkörper, einer Bodenplatte, die ein Ende des Behälters verschließt, einem Ring, der am offenen Ende des Behälters befestigt ist und aus einem Deckel oder Stopfen, der in den Ring paßt und den Behälter verschließt (US-A-4-421 440).

Der zylindrische Behälterkörper wird gewöhnlich aus einem rechteckigen, flachen Stück Blech geformt, das zu einem Zylinder gerollt wird, wobei die Längsseiten durch eine kontinuierliche Seitenlötnaht miteinander verbunden werden. Danach wird eine kreisförmige Bodenplatte, gewöhnlich durch einen umgebördelten Doppelfalz, an einem der offenen Enden des Zylinders befestigt, während am anderen Ende des Zylinders ein mit einer Nute versehener Ring in ähnlicher Weise angebracht wird. Hierbei können verschiedene ARten von Falzen Verwendung finden. Um den Behälter leicht tragen zu können, sind am Behälter Henkel, Aufhängeösen oder Tragbügelösen vorgesehen, die auf diametral einander gegenüberliegenden Seiten in den Behälter eingeklemmt sind.

Die Tragzapfen bestehen im allgemeinen aus napfförmigen Stanzstücken, die einen am Rand des Napfes ausgebildeten Umgangsflansch haben (siehe z.B. auch GB-A 1 203 758). Bevor das Blech zu einem Zylinder gerollt wird, werden mit mehreren Werkzeugen zwei Einbuchtungen eingepreßt, die nach dem Rollen des Bleches zu einem Zylinder einander diametral gegenüberliegen. Dann werden die Aufhängeösen in diese Einbuchtungen eingefügt und die Ränder der Einbuchtungen über die Flanschen der Aufhängeösen gebogen, um die Ösen am Behälterkörper vor dem Rollen zu befestigen. Dieses bekannte Anbringen der Tragbügelösen ist sehr umständlich und erfordert viele Verfahrensgänge und die Verwendung verschiedener Werkzeuge, wodurch die Herstellung der Behälter verteuert wird. Es sind auch Behälter mit Tragbügelösen bekannt (US-A-3 476 289), die einen napfförmigen Körper aufweisen, an dessen freiem Rand zwei diametral einander gegenüberliegende Lappen angeformt sind. In jedem Lappen ist ein Noppen ausgedrückt, der einen zwischen Tragbügelöse und Behälterwand eingelegten Isolierring durchsticht und mit dem die Tragbügelösen punktförmig auf elektrischem Wege an den Behälter angeschweißt werden. Diese Art der Befestigung ist unsicher und die Tragbügelösen können leicht abreißen. Außerdem erfordert das Anbringen der Tragbügelösen besondere Stützungsmaßnahmen für den zylindrischen Behälter beim Anschweißen, wodurch die Herstellung verteuert wird.

Mit der Erfindung werden diese Nachteile dadurch vermieden, daß jeder napfförmige Körper zwei an diesem diametral einander gegenüberliegend angeordnete Lappen aufweist , die durch Widerstandsschweißung so an dem Blechstück befestigt werden, daß sich die Lappen der Ösen in ihrer Längsrichtung im wesentlichen parallel zu den Längsrändern des Blechstückes erstrecken, das dann zu dem Behälter gerollt wird.

Bei einem solchen Verfahren werden die mit vielen Werkzeugen durchzuführenden, zahlreichen Bearbeitungsschritte vermieden, die bisher erforderlich waren, um solche Ösen anzubringen. Hierbei ist es besonders zweckmäßig, wenn die Längsränder des zu dem zylindrischen Metallbehälters gerollten Blechstückes nach dem Rollen einander nicht mehr als etwa 0,4 mm überlappen und durch Widerstandsschweißung verschweißt werden.

Die Erfindung wird durch die Zeichnung an einem Ausführungsbeispiel näher erläutert. Es zeigt:
Fig. 1 einen Behälter nach der Erfindung in einer schematischen Schnittdarstellung und
Fig. 2 einen der Tragzapfen des Behälters in einer Ansicht nach Linie 2-2 der Fig. 1.

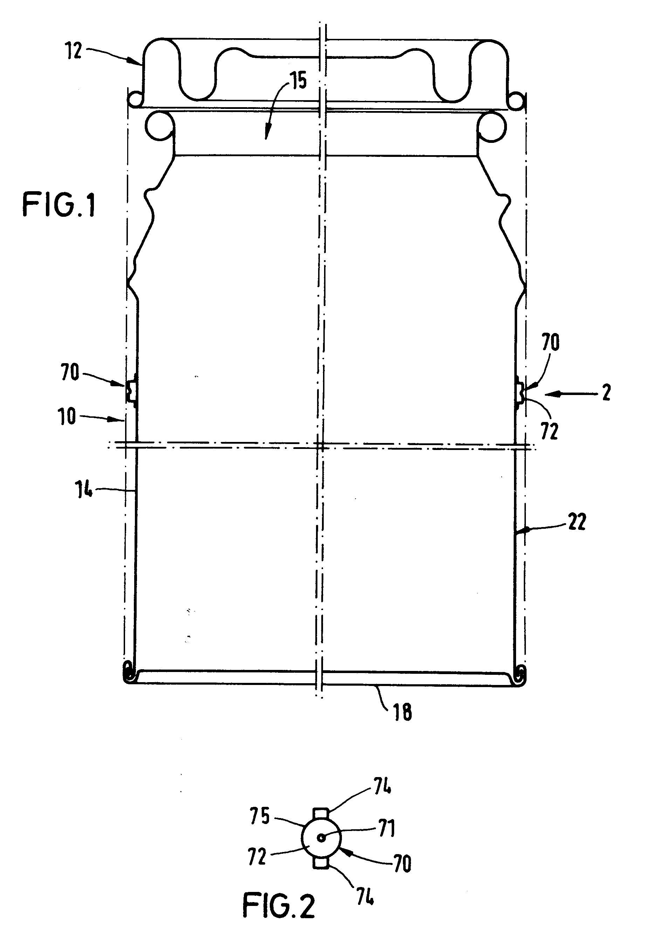

Fig. 1 zeigt eine schematische Schnittdarstellung eines ringlosen Behälters 10 und eines Deckels 12, der auf den Behälter 10 aufgesetzt werden kann. Der Behälter 10 und der Deckel 12 werden aus einem verzinnten Blech hergestellt, das bei verschiedenen Temperaturen und in verschiedenen Arbeitsgängen vergütet wird, um ihm die gewünschten physikalischen Eigenschaften zu verleihen.

Die Seitenwand 14 des Behälters 10 wird aus einer rechteckigen Blechplatte in die in Fig. 1 dargestellte zylindrische und kegelstumpfförmige Form gewalzt, nicht gezogen. Die Längsränder der flachen Platte werden in einem Längsfalz, der in den Zeichnungen nicht dargestellt ist, miteinander verbunden, wobei sich der Falz vom Boden 18 bis zum offenen Ende 15 des Behälters erstreckt.

Nach der Erfindung wird der Längsfalz durch Widerstandsschweißung der einfach übereinandergelegten Längsränder der rechteckigen Platte gebildet. Die Überlappung wird hierbei in vorteilhafter Weise auf einen kleinstmöglichen Wert gebracht, der 0,4 mm nicht überschreitet. Wenn die überlappenden Ränder durch Widerstandsschweißung verbunden werden, wird die Dicke der Schweißverbindungen so gesteuert, daß sie weniger als die doppelte Dicke des Metalles der Behälterseitenwand und vorzugsweise etwa das Anderthalbfache dieser Dicke beträgt. Auf diese Weise wird ein Längsfalz von nur etwa 0,4 mm Breite gebildet und dieser Längsfalz ist nur etwa 1,5 mal so dick wie das Metallblech. Gleichwohl ist kaum ein Riß zu erwarten.

Auf dem zylindrischen Teil 22 der Seitenwand 14 des Behälters 10 sind an diametral einander gegenüberliegenden Stellen zwei Tragbügelösen 70 vorgesehen, in die die Enden eines nicht näher dargestellten Drahthandgriffes zum Tragen des Behälters 10 eingeführt werden können. Die Tragbügelösen 70 bestehen aus einem napfförmigen Körper 72, der in seinem Basisteil eine Öffnung 71 für ein Ende des Drahthandgriffes und an seinem freien Rand 75 zwei diametral einander gegenüberliegende, angeformte Lappen 74 aufweist. Die Lappen 74 werden dann durch Widerstandsschweißung an der Seitenwand 14 des Behälters 10 befestigt, wodurch die Tragzapfen 70 an der Seitenwand 14 festsitzen. Die Lappen oder Laschen 74 erstrecken sich in bemerkenswerter Weise in ihrer Längsrichtung parallel zu den Längsrändern der Platte, die zu einer zylindrischen Seitenwand 14 gewalzt wird.

Die Breite der Lappen 74 und ihre Dicke wird so gewählt, daß diese Lappen beim Rollen der Seitenwandung 14 zu dem zylindrischen Behälter nicht stören. Wenn die Lappen 74 nicht, wie oben dargelegt, ausgerichtet sind, werden die Tragbügelösen 70 beim Walzvorgang von der Seitenwandung 14 abgerissen oder sie drücken die Seitenwand 14 ein, was in dem Bereich leicht geschehen kann, wo die Tragbügelösen 70 durch Widerstandsschweißung an der Seitenwand 14 befestigt sind.

## Patentansprüche

1. Verfahren zum Herstellen eines zylindrischen Metallbehälters, insbesondere für Farben od.dgl., bei dem zwei Tragbügelösen (70) mit napfförmigem Körper (72) an voneinander entfernten Stellen an einem rechteckigen, flachen, die Seitenwand (14) des Behälters (10) bildenden Blechstück befestigt werden und dann der Behälter (10) in seine zylindrische Form gerollt wird und die Längsränder des Blechstückes miteinander verbunden werden, so daß die Tragbügelösen (70) sich an diametral einander gegenüberliegenden Stellen des zylindrischen Metallbehälters befinden, **dadurch gekennzeichnet**, daß jeder napfförmige Körper (72) zwei an diesem diametral einander gegenüberliegend angeordnete Lappen (74) aufweist, die durch Widerstandsschweißung so an dem Blechstück befestigt werden, daß sich die Lappen (74) der Tragbügelösen (70) in ihrer Längsrichtung im wesentlichen parallel zu den Längsrändern des Blechstückes erstrecken, das dann zu dem Behälter (10) gerollt wird.

2. Verfahren nach Anspruch 1, **dadurch gekennzeichnet,** daß die Längsränder des zu dem zylindrischen Metallbehälter (10) gerollten Blechstückes nach dem Rollen nicht mehr als etwa 0,4 mm überlappen und durch Widerstandsschweißung verschweißt werden.

## Claims

1. Process for producing a cylindrical metal container, in particular for paints or the like, in which two carrying handle lugs (70) having a cup-shaped body (72) are fastened at spaced-apart points to a rectangular, flat piece of metal sheet, forming the side wall (14) of the container (10), and then the container (10) is rolled into its cylindrical shape and the longitudinal edges of the piece of metal sheet are connected to each other, so that the carrying handle lugs (70) are located at diametrically opposite points of the cylindrical metal container, characterised in that each cup-shaped body (72) has two lobes (74) arranged diametrically opposite each other on the latter, which lobes are fastened by resistance welding to the piece of metal sheet in such a way that the lobes (74) of the carrying handle lugs (70) extend in their longitudinal direction essentially parallel to the longitudinal edges of the piece of metal sheet, which is then rolled to form the container (10).

2. Process according to Claim 1, characterised in that the longitudinal edges of the piece of metal sheet rolled to form the cylindrical metal container (10) overlap no more than about 0.4 mm after rolling and are welded by resistance welding.

## Revendications

1. Procédé de fabrication d'un récipient métallique cylindrique, en particulier pour des peintures ou analogues, dans lequel deux oeillets porteurs en forme d'étriers (70), comportant un corps en godet (72), sont fixés, en des endroits espacés l'un de l'autre, sur une pièce de tôle, rectangulaire, plate, formant la paroi latérale (14) du récipient, puis le récipient (10) est roulé pour prendre sa forme cylindrique et les bords longitudinaux de la pièce de tôle sont reliés l'un à l'autre, de telle façon que les oeillets porteurs en forme d'étriers (70) se situent en des endroits diamétralement opposés l'un de l'autre du récipient métallique cylindrique, caractérisé en ce que chaque corps en godet (72) présente deux languettes (74) disposées diamétralement opposées, fixées par soudage par résistance, sur la pièce de tôle, de telle façon que les languettes (74) des oeillets porteurs en forme d'étriers (70) s'étendent, longitudinalement, pratiquement parallèlement aux bords longitudinaux de la pièce de tôle, qui est ensuite roulée pour donner le récipient (10).

2. Procédé selon la revendication 1, caractérisé en ce que les bords longitudinaux de la pièce de tôle, roulée pour donner le récipient métallique cylindrique (10), ne se chevauchent, après roulage, pas plus que d'à peu près 0,4 mm et sont soudés par soudage par résistance.
